# NEUE EUROPÄISCHE PATENTSCHRIFT

(11) **EP 0 530 786 B2**
(45) Veröffentlichungstag und Bekanntmachung des Hinweises auf die Entscheidung über den Einspruch: **17.10.2001**
(45) Hinweis auf die Patenterteilung: 17.05.1995
(21) Anmeldenummer: 92115016.5
(22) Anmeldetag: 03.09.1992
(51) Int. Cl.: H02K 5/128, H02K 15/14, B21D 51/10

(54) **Spalttopf für einen Spaltrohrmotor sowie Verfahren zum Herstellen eines Spalttopfes**
Airgap hood for a gap-tube motor and also method of manufacturing an airgap hood
Chemise d'entrefer pour un moteur à tube d'entrefer et aussi méthode de fabrication d'une chemise d'entrefer

(30) Priorität: 06.09.1991 DE 4129590
(43) Veröffentlichungstag der Anmeldung: 10.03.1993
(73) Patentinhaber: Progress-Werk Oberkirch Aktiengesellschaft, 77704 Oberkirch (DE)
(72) Erfinder: Ernst, Wilhelm, W-7602 Oberkirch-Zusenhofen (DE)
(74) Vertreter: Weller, Wolfgang, Dr.rer.nat.

(56) Entgegenhaltungen:
- BE-A- 626 708
- DE-A- 2 448 699
- DE-A- 3 511 464
- DE-A- 3 538 976
- DE-A- 3 609 311
- DE-B- 1 188 192
- DE-U- 1 868 925
- GB-A- 1 204 165
- GB-A- 2 216 052
- US-A- 3 911 300
- US-A- 4 584 859

## Beschreibung

Die Erfindung betrifft einen Spalttopf für einen Spaltrohrmotor, mit einem Spaltrohr, dessen Innenraum als Rotorraum zur Aufnahme eines Rotors des Spaltrohrmotores dient, mit einem an einem hinteren Ende des Spaltrohres angeordneten, dieses Ende abschließenden Boden, der einen gegenüber dem Spaltrohrdurchmesser geringeren Rohrabschnitt aufweist, der zur Aufnahme eines hinteren Lagers des Rotors dient, wobei Spaltrohr, Boden und dessen Rohrabschnitt als einstückiges Tiefziehteil ausgebildet sind, und wobei an einem vorderen Ende des Spaltrohres, einstückig mit diesem, ein Ringflansch ausgeformt ist

Die Erfindung betrifft ferner ein Verfahren zum Herstellen eines derartiges Spalttopfes für einen Spaltrohrmotor.

Ein derartiger Spalttopf und ein Verfahren zu dessen Herstellung ist aus der DE-A-3 609 311 bekannt.

Der daraus bekannte Spalttopf ist als einstückiges Tiefziehteil ausgebildet, wobei sich an den Flansch, der am vorderen offenen Ende des Spalttopfes ausgebildet ist, einstückig ein zylindrisches Mantelrohr anschließt, das den Spalttopf umrundet, und zwar in einem derartigen Abstand, daß zwischen Außenseite des Spalttopfs und Innenseite des zylindrischen Mantelrohres die Ständerwicklung des Rotors aufgenommen werden kann. Diese Ausformung dient dazu, einen sicheren Schutz gegen das Eindringen von Wasser in die Ständerwicklung bei Versagen von Wellendichtringen der Pumpenwelle sicherzustellen.

Diese konstruktive Ausgestaltung verlangt neben der Ausformung des Spalttopfes mit dem am hinteren Ende vorgesehenen durchmessergeringeren Bereich zur Aufnahme eines hinteren Wellenlagers noch zusätzliche weitere Verformgänge zur Ausbildung des zylindrischen Mantelrohrs. Wenngleich in diesem Dokument das Herstellungsverfahren dieses kompliziert geformten Gebildes nicht näher beschrieben ist, erscheint es einleuchtend, daß das zylindrische Mantelrohr nach Ausbildung des Spaltrohrtopfes geformt wird. Dabei ist Sorge zu tragen, daß bei dieser Formung keine Verformung des bereits ausgebildeten Spalttopfes stattfindet, denn im Bereich des Spalttopfes ist eine hohe Maßhaltigkeit deswegen notwendig, da der Spalttopf exakt in den Luftspaltzwischen Stator und Rotor passen muß. Ist diese Formhaltigkeit nicht gegeben, ist kein störungsfreier Lauf des Spaltrohrmotores gewährleistet.

Aus der BE-A-626 708 ist ein Spalttopf bekannt, an dessen vorderem offenen Ende ein Ringflansch ausgeformt ist. Der Spalttopf wird über diesen Ringflansch an einem Teil des Gehäuses des Spaltrohrmotores befestigt, wobei von diesem Teil ein Ringflansch etwas in den Innenraum des Spalttopfes vorspringt, so daß eine Anlageschulter gebildet ist, an der der Spalttopf im Bereich seines vorderen Endes sowie im Bereich seines Ringflansches passend sitzt Zwischen Flansch des Spalttopfes und dem Gehäusebauteil ist eine Dichtung gelegt. Die mechanische Verbindung erfolgt über eine Schraubverbindung. Damit der Druck der Schrauben gleichmäßig auf das Dichtungsmaterial verteilt werden kann, und da der Spalttopf im Ringflanschbereich sehr dünn ausgebildet ist, wird zuvor von hinten über den Spalttopf noch zusätzlich ein Ring aufgeschoben, dessen Ringbreite in etwa dem Flansch des Spalttopfes entspricht. Ferner weist dieser Ring einen in Richtung der Zylinderachse des Spalttopfes weisenden Ringflansch auf, dessen axiale Länge in etwa der axialen Länge des in die Innenseite des offenen Endes des Spalttopfes hineinreichenden Flansches des Gehäuseteiles entspricht. Über diesen Ring können nun die von den Schrauben ausgeübten Kräfte gleichmäßig auf die Dichtung verteilt werden, ohne daß Beeinträchtigungen am relativ dünnen Ringflansch des Spalttopfes zu befürchten sind. Der übergeschobene Ring weist in seinem axial erstreckenden Ringflanschbereich einen solchen Innendurchmesser auf, der genau dem Außendurchmesser des Spaltrohrkörpers entspricht Dadurch können an der Außenseite des Spaltrohres Kratzer oder Rillen beim Aufschieben des Ringes entstehen. Die Montage der zahlreichen Teile ist aufwendig.

Aus der US-A- 3 911 300 ist ein Spalttopf bekannt, an dessen vorderem Endbereich ein aufgeweiteter, durchmessergrößerer Abschnitt vorhanden ist.

Aus der DE-A-3 538 976 ist ein Spalttopf bekannt, an dessen hinterem, durchmessergeringerem Endabschnitt im Boden eine Öffnung vorgesehen ist, in die eine Schraube eindrehbar ist

Durch Ausdrehen der Schraube ist ein Zugang an das hintere Ende des Rotors möglich, beispielsweise um diesen bei feststehenden Rotor wieder andrehen zu können.

Unter einem Spaltrohrmotor versteht man einen Elektromotor, der insbesondere zum Antrieb von Pumpen, beispielsweise Umwälzpumpen, dient. Unter "Spaltrohr" versteht man ein rohr- bzw. buchsenförmiges Element, das bei einer Umwälzpumpe die Trennung zwischen einem nassen Innenraum und einem trockenen Außenraum herstellt. Der Innenraum des zylindrischen Spaltrohres dient zur Aufnahme des Rotors des Elektromotors: um die Außenseite des Spaltrohres herum ist der Stator der Elektromotors angeordnet. Der Name "Spaltrohr" kommt daher, daß sich der rohrförmige Abschnitt entlang des Luftspaltes zwischen Stator und Rotor erstreckt. An einem außeren hinteren Ende des Spaltrohres ist ein dieses Ende abschließender Boden vorhanden, der gegenüber dem Spaltrohr einen durchmessergeringeren Rohrabschnitt aufweist, in den ein Lager der Welle des Rotors aufgenommen ist. Am gegenüberliegenden, vorderen Ende des Spaltrohres ist ein etwa ringscheibenförmiges Lagerschild angebracht, das als Befestigungsflansch dient. Dervordere, offene Endbereich des Spaltrohres dient zur Aufnahme eines Einsatzes, der ein Lager für ein vorderes Ende der Welle des Rotors enthält. Der eingangs erwähnte Spaltrohrmotor dient zum Antrieb einer Umwälzpumpe, deren Laufrad auf einem in den Pumpenraum ragenden Abschnitt der Welle des Rotors sitzt Das vom Laufrad umgewälzte Medium kann in den Innenraum des Spaltrohres eintreten und dortzur Kühlung des Rotors herangezogen werden. Der Zusammenbau aus Lagerschild, Spaltrohr und hinterem Boden mit rohrförmigem Abschnitt dient zugleich dazu, einen dichtenden Abschluß zwischen nassem Innenraum und trockenem Außenraum herzustellen.

Ein Verfahren zur Herstellung dieses aus drei Teilen aufgebauten Zusammenbaus besteht darin, das zylindrische Spaltrohr aus einem zunächst ebenen Blechteil dadurch herzustellen, daß dieses in einen rohrförmigen Körper geformt wird und über eine Längsnaht zu einem hohlzylindrischen Körper verschweißt wird. Durch Walken dieses Bauelements wird die gewünschte dünne Wandstärke im Bereich von etwa 0,3 mm erzielt. Der als hinterer Abschluß des an beiden Enden offenen Spaltrohres dienende Boden mit dem durchmessergeringeren Rohrabschnitt zur Aufnahme des Lagers des Rotors wird als separates Teil geformt, zum Beispiel als Stanzteil, und anschließend beispielsweise über eine Verschweißung mit dem hinteren Ende des Spaltrohres verbunden. Gleichermaßen wird das vordere als Befestigungsflansch dienende Lagerschild als separates Teil ausgeformt und anschließend mit dem vorderen offenen Ende des Spaltrohres über einen Verschweißvorgang verbunden. Das daraus resultierende, aus drei separaten Teilen zusammengesetzte Bauteil wird als "Spaittopf" bezeichnet.

Nachteilig an einem Spalttopf der eingangs genannten Art sowie an dessen Herstellungsverfahren ist, daß dieses sehr aufwendig ist. Insbesondere in der Großserienproduktion, wie sie bei Spaltrohrmotoren üblich ist, wobei Herstellungsgrößen im Bereich von 2 bis 3 Millionen pro Jahr vorhanden sind, führt diese aufwendige Herstellung zu einem erheblichen apparativen und logistischen Aufwand. Das Herstellen der drei Einzelteile, die den Spalttopf aufbauen, insbesondere über verschiedenartige formgebende Vorrichtungen, wie Walkvorrichtungen, Stanz- oder Preßvorrichtungen, ist sehr aufwendig, ebenso das anschließende Verfahren zum Zusammenfügen dieser drei Teile. Da, wie zuvor erwähnt, der Spalttopf einen dichtenden Abschluß zwischen dem nassen Innenraum und dem trockenen Außenraum eines Pumpenmotors schaffen soll, müssen die Verbindungsstellen, meist Schweißstellen, zwischen den Endbereichen des zylindrischen Spaltrohres un den anzufügenden Bauteilen entsprechend großflächig und aufwendig hergestellt werden, um die Dichtheit sicherzustellen. Dazu sind auch aufwendige Dichtungsprüfungen notwendig.

Aufgabe der vorliegenden Erfindung ist daher, einen Spalttopf der eingangs genannten Art zu schaffen, der einen einfachen konstruktiven Aufbau aufweist, der einfach herzustellen ist.

Erfindungsgemäß wird die Aufgabe durch einen Spalttopf mit den Merkmalen des A₁ gelöst.

Erfindungsgemäß wird die Aufgabe durch ein Verfahren mit den Merkmalen des Anspruches 7 gelöst.

Bei der gemäß der vorliegenden Erfindung vorgeschlagenen Ausgestaltung des Spalttopfes und bei dessen Herstellungsverfahren wird ein Spaltrohr über mehrere Tiefziehvorgänge so hergestellt, daß der am offenen Ende ausgebildete Flansch nur ein relativ geringes radiales Maß aufweist, an den sich, in Richtung geschlossenem Ende des Flansches gesehen, der geringfügig aufgeweitete, durchmessergrößere Abschnitt anschließt.

Es ist bekannt, daß es beim Tiefziehen von langen dünnen Rohren notwendig ist, an beiden Enden des Rohres einen Hilfsflansch vorzusehen, wobei ein solcher endseitiger Hilfsflansch zum einen dazu dient, über diesen Hilfsflansch das Material in diesem Bereich ortsfest zu halten, währenddessen beispielsweise ein Ziehdorn die zylindrische Wand des Spaltrohres in die gewünschte axiale Länge zieht. Ferner dienen die Hilfsflansche dazu, daß nach Beendigung des Ziehvorganges das Rohr überhaupt vom Dorn abgezogen werden kann. Durch Rückfederung des Materials sitzt ein rohrförmiger Körper sehr fest auf dem Ziehdorn, so daß erhebliche Kräfte notwendig sein können, um das Tiefziehteil vom Dorn abzuziehen. Dabei sollen jedoch keine Verformungen des zylindrischen Körpers an sich stattfinden, weswegen man sich der Hilfsflansche bedient. Nach Vollenden der Tiefziehvorgänge werden die Hilfsflansche über aufwendige Verfahren abgetrennt Dadurch, daß nunmehr vorgeschlagen wird, am vorderen offenen Ende des Spaltrohres einen Ringflansch auszuformen, kann dieser zugleich als "Hilfsflansch" während der Tiefziehvorgänge dienen, also zum Halten und zum Abziehen, ohne daß dieser dann in einem aufwendigen Verfahren abgetrennt werden muß. Der Übergang am hinteren Ende des Spaltrohres von dem Bereich mit großem Durchmesser zu dem durchmessergeringeren Rohrabschnitt ist für sich allein gesehen ebenfalls als Ringflansch ausgebildet, der, beispielsweise beim Tiefziehen des durchmessergeringeren Rohrabschnittes, wiederum als "Hilfsflansch" dienen kann, also zum Halten des hinteren Endes des Spaltrohres beim Formen des durchmessergeringeren Rohrabschnittes, der dann auch wieder als Ansatzpunkt für einen Auswerfdorn zum Abziehen von dem eigentlichen Formdorn dienen kann. Auch dieser "Hilfsflansch" bleibt integrales einstückiges Bestandteil des herzustellenden Spalttopfes und muß nicht abgetrennt werden. Die einstückige Ausbildung des hinteren geschlossenen Endbereiches des Spaltrohres als einstückiges Tiefziehteil erleichtert gegenüber dem eingangs genannten Verfahren die Herstellung insbesondere deswegen, weil die Tiefziehvorgänge auf einer einzigen Vorrichtung, meist in aufeinanderfolgenden Schritten in einer Stufenpresse durchgeführt werden können. Dadurch fällt das Vorsehen von verschiedenartigen getrennten Vorrichtungen zum Ausbilden dieser nunmehr einstückigen Teile weg. Außerdem entfällt die Logistik des lagegerechten Zusammenführens dieser Teile vor dem eigentlichen Verbindungsvorgang, beispielsweise dem eingangs erwähnten Verschweißen. Dieser Verbindungsvorgang, also das Verschweißen selbst, entfällt, was beispielsweise auch im Hinblick auf die Arbeitsplatzausgestaltung, die Arbeitssicherheit und die Umweltverträglichkeit erhebliche positive erleichternde Einflüsse hat. Zusätzlich entfällt der Kontrollvorgang dahingehend, ob die Schweißstelle auch tatsächlich flüssigkeitsdicht ist.

Der am gegenüberliegenden vorderen Ende ausgeformte Ringflansch kann nun dazu dienen, den Spalttopf im Pumpengehäuse zu montieren. Der Ringflansch kann dann dabei so ausgestaltet sein, daß er schon selbst ausreichend groß ist, um direkt eine Verbindung mit dem Pumpengehäuse herzustellen, oder er kann als Verbindungselement für weitere Montageelemente, beispielsweise einen separaten Befestigungsflansch, dienen. Insgesamt gesehen wird eine beträchtliche Vereinfachung des apparativen Aufwandes zur Herstellung des Spalttopfes geschaffen, ferner der logistische Aufbau der zusammenwirkenden Vorrichtungen wesentlich vereinfacht, da die gesamten Herstellungsvorgänge auf einer einzigen Stufenpresse durchgeführt werden können, der beispielsweise an einem Ende ein ebener scheibenförmiger Rohling zugeführt wird und am anderen Ende der endfertige, ausgeformte Spalttopf abgeführt wird. Außerdem sind aufwendige Kontrollmaßnahmen von Verbindungsstellen, beispielsweise die eingangs erwähnten Schweißstellen, nicht mehr notwendig, da ja solche nicht mehr vorhanden sind.

Das Vorsehen des geringfügig aufgeweiteten, durchmessergrößeren Abschnittes entsprechend der vorliegenden Erfindung hat den Vorteil, daß vom hinteren Ende her ein zusätzlicher Montageflansch, ein sogenanntes Lagerschild, über den Spalttopf geführt werden kann und anschließend im Preßsitz auf den aufgeweiteten durchmessergroßen Abschnitt aufgedrückt werden kann. Der endseitige bereits vorhandene Ringflansch dient dabei zugleich als Endanschlag und verhindert, daß das Lagerschild über das vordere offene Ende hinausgeschoben wird. Der lichte Innendurchmesser des überzuschiebenden Lagerschildes kann dann so bemessen werden, daß dieser etwas größer ist als der Außendurchmesser des Spaltrohres im nichtaufgeweiteten Bereich. Dadurch kann dann das Lagerschild über die Außenseite des Spaltrohres geschoben werden, ohne daß an dessen Außenseite Kratzspuren oder dergleichen resultieren. Auf diese Weise kann dann anschließend bei der Endmontage der Stator sicher und festsitzend auf der Außenseite des Spaltrohres montiert werden. Zur Herstellung einer unlösbaren Verbindung zwischen dem Spaltrohr und dem aufgeschobenen, bereits im Preßsitz aufsitzenden Lagerschild kann noch ein Verschweißvorgang, beispielsweise ein Laserschweißen, nachfolgen.

In einer weiteren Ausgestaltung der Erfindung ist in einem Boden, der ein hinteres Ende des durchmessergeringeren Rohrabschnittes am hinteren Ende des Spaltrohres abschließt, eine Öffnung vorgesehen.

Diese an sich bekannte Maßnahme des Vorsehens einer Öffnung hat den Vorteil, daß von der Außenseite her ein Zugang an ein stirnseitiges hinteres Ende der Rotorwelle möglich ist, so daß ein festsitzender Rotor wieder angestoßen werden kann.

In einer weiteren Ausgestaltung der Erfindung weist der durchmessergeringere Rohrabschnitt an einem hinteren Bereich einen geringfügig eingeengten, durchmessergeringeren Abschnitt auf.

Diese Maßnahme hat den Vorteil, daß von der Innenseite her in den durchmessergeringeren Abschnitt des Rohrabschnittes eine Ringscheibe im Preßsitz eingebracht werden kann.

Der Außendurchmesser der Ringscheibe ist derart bemessen, daß er etwas geringer ist als der lichte Innendurchmesserdes Rohrabschnittes im nicht zusätzlich eingeengten Bereich. Dadurch kann bei der Montage der Ringscheibe diese vom offenen Ende des Spaltrohres her in den gegenüber dem Spaltrohr durchmessergeringeren Rohrabschnitt eingebracht werden, und zwar zunächst in dessen nicht verjüngtem Bereich, ohne daß dabei die Innenwand dieses Bereiches berührt wird. Dadurch sind dann Beschädigungen wie Längsrillen oder dergleichen ausgeschlossen. Der erste, nicht weiter eingeengte Abschnitt des Rohrabschnittes dient ja nachfolgend als Lagersitz für ein auf das hintere Ende der Rotorwelle aufgenommenes Lager, das meist ebenfalls im Preßsitz in den rohrförmigen Abschnitt eingebracht wird. Sind nun durch die Montage der Ringscheibe Rillen oder Kratzspuren vorhanden, ist der sichere Sitz des Wellenlagers nicht mehr gewährleistet.

Falls gewünscht, kann die im Preßsitz eingebrachte Scheibe noch über einen Verschweißvorgang unverlierbar mit dem Rohrabschnitt verbunden werden, wobei dies beispielsweise durch ein Laserschweißen erfolgt.

Vorzugsweise erfolgt dieses Laserverschweißen zugleich mit dem Verschweißen des überdie Außenseite des Spaltrohres aufgeschobenen ringscheibenförmigen Lagerschildes.

Die eingepreßte und ggf. verschweißte Ringscheibe weist vorzugsweise ein Innengewinde auf, in das von der rückwärtigen Außenseite her ein Gewindeverschlußstopfen eingedreht werden kann, der zugleich für einen dichtenden Abschluß der am hinteren Endbereich des rohrförmigen Abschnitts vorgesehenen Öffnung sorgt.

Bei dem Herstellungsverfahren ist besonders bevorzugt, daß, in einer ersten Serie an mehreren aufeinanderfolgenden Tiefziehvorgängen, zunächst ein topfförmiger Rohling tiefgezogen wird, der an einem hinteren Ende durch einen Boden verschlossen ist und an einem vorderen Ende mit einem Ringflansch versehen ist, wobei anschließend in einer zweiten Serie an Tiefziehvorgängen aus dem Boden ein sich vom hinteren Ende des Rohlings fort erstreckender durchmessergeringerer Rohrabschnitt hergestellt wird. Diese Maßnahme hat den Vorteil, daß über einfach als Zylinder ausgebildete Ziehdorne der hohlzylindrische Körper des Spaltrohres hergestellt wird, wobei durch die Streckvorgänge die entsprechende gewünschte dünne Wandstärke des Spaltrohres hergestellt wird. Der am offenen vorderen Ende vorhandene Ringflansch sowie der am gegenüberliegenden geschlossenen Ende vorhandene Boden weisen dabei noch in etwa die ursprüngliche Stärke auf. Anschließend wird in einer zweiten Serie an Tiefziehvorgängen aus dem meist noch ebenen Boden des bereits endfertigen Spaltrohrkörpers dann der hohlförmige Abschnitt geformt, wobei dies dann nacheinanderfolgend mit einer Reihe von entsprechend durchmessergeringeren Dornen bewerkstelligt wird.

Die entsprechende Stufenpresse ist dann so aufgebaut, daß zunächst eine Reihe an sehr großen Dornen vorhanden ist, die den Spaltrohrkörper formen, gefolgt von einer Reihe an durchmessergeringeren Ziehdornen für die Ausbildung des durchmessergeringeren Rohrabschnittes. Dies bringt erhebliche Vorteile beim Aufbau der Stufenpresse und der Steuerung der einzelnen Tiefziehwerkzeuge mit sich. Es werden also erste und zweite Serien direkt aufeinanderfolgend in einer Vorrichtung durchgeführt.

In weiteren Ausgestaltungen der Erfindung ist vorgesehen, zunächst den rohrförmigen durchmessergeringeren Abschnitt tiefzuziehen und erst anschließend den durchmessergrößeren Körper des eigentlichen Spaltrohres.

In einer weiteren Ausgestaltung der Erfindung ist vorgesehen, diese Tiefziehvorgänge miteinanderzu koppeln, das heißt, daß über Teilformungsvorgänge Vorformen des eigentlichen Spaltrohres und Vorformen des rohrförmigen Abschnittes zugleich hergestellt werden.

Dabei ist insbesondere von Vorteil, daß im allerersten Schritt ein Topf mit einem Ringflansch am vorderen offenen Ende hergestellt wird.

Diese Maßnahme hat den Vorteil, daß bereits beim ersten Tiefziehvorgang ein Ringflansch ausgebildet wird, der ein Halten des Formrohlings oder ein Lösen des Rohlings vom Dorn ermöglicht.

Das Vorsehen des geringfügig aufgeweiteten Endbereichs des Spaltrohres im Bereich das Ringflansches zum Aufpressen des Lagerschildes, sowie das Vorsehen des etwas eingeengten Endabschnittes des hohlförmigen Abschnittes am hinteren geschlossenen Ende wird vorzugsweise am Ende der Serie an Tiefziehvorgängen bewerkstelligt, so daß die bei diesen Formvorgängen erzielte Maßgenauigkeit nicht durch nachfolgende weitere Tiefziehvorgänge beeinträchtigt wird. Diese Maßnahme hat den Vorteil, daß sehr maßgenaue Abschnitte zur Verbindung mit dem Lagerschild bzw. der Ringscheibe hergestellt werden können.

Durch Anisotropie des metallischen Materials kann es vorkommen, daß der bereits anfänglich ausgeformte Ringflansch, in umfänglicher Richtung gesehen, nicht exakt kreisförmig ist, sondern eine Wellenlinie aufweist, so daß, falls gewünscht, ein abschließendes umfängliches Beschneiden zu einer exakten Kreisform vorgesehen werden kann.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert Es zeigen:
- Fig. 1: einen Längsschnitt eines bevorzugten Ausführungsbeispiels eines erfindungsgemäßen Spalttopfes,
- Fig. 2a-2e: der Figur 1 entsprechende Schnitte einer ersten Serie von Vorzugsformen von Topfrohlingen bei der Herstellung des Spalttopfes von Fig. 1,
- Fig. 3a-3e: eine zweite Serie an Vorzugsformen, die nachfolgend nach der ersten Serie stufenweise hergestellt werden, und
- Fig. 4: stark schematisiert einen Spaltrohrmotor zum Antrieb einer Umwälzpumpe, in der der in Fig. 1 dargestellte Spalttopf eingebaut ist.

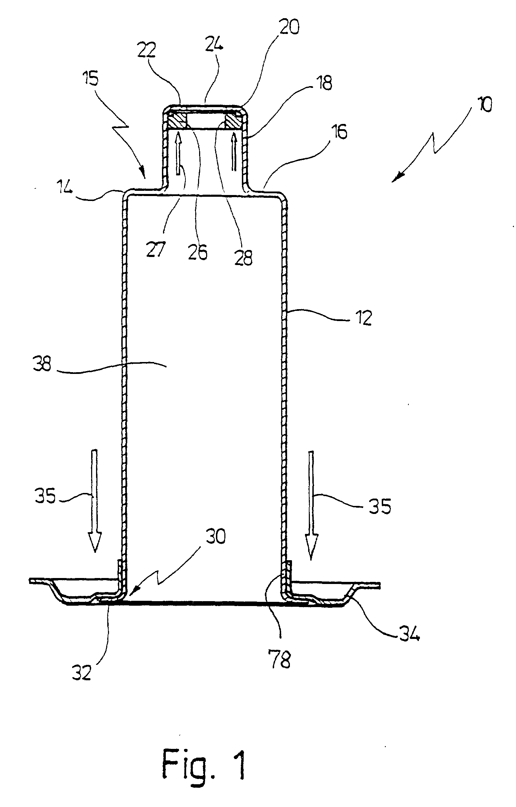

Ein in Fig. 1 dargestelltes Ausführungbeispiel eines erfindungsgemäßen Spalttopfes 10 weist ein zylindrisches Spaltrohr 12 auf, dessen hinteres Ende 14 durch einen Boden 15 verschlossen ist. Der Boden 15 und das Spaltrohr 12 sind einstückig ausgebildet.

Das Spaltrohr 12 geht am hinteren Ende 14 über einen Ringflanschbereich 16 in einen durchmessergeringeren Rohrabschnitt 18 über.

Ein hinteres Ende 20 des Rohrabschnittes 18 ist über einen ebenen Boden 22 abgeschlossen, der mittig eine kreisrunde Öffnung 24 aufweist.

Der ebene Boden 22 verläuft dabei parallel zum Ringflanschbereich 16.

Im Bereich des hinteren Endes 20 des Rohrabschnittes 18 ist im Preßsitz eine Ringscheibe 26 aufgenommen, die, wie dies durch Pfeile 27 angedeutet ist, vom Spaltrohr 12 her in den Innenraum des Rohrabschnittes 18 eingepreßt wurde.

Die Ringscheibe 26 weist mittig eine Gewindeöffnung 28 auf, die mit der Öffnung 24 fluchtet.

An einem vorderen Ende 30 ist das Spaltrohr 12 mit einem nach außen gerichteten umlaufenden Ringflansch 32 versehen, der einstückig mit dem Spaltrohr 12 ausgebildet ist.

Auf dem Ringflansch 32 liegt ein über die Außenseite des Spaltrohres 12 aufgeschobenes Lagerschild 34, wie dies durch Pfeile 35 dargestellt ist.

Das Lagerschild 34 ist mit dem Ringflansch 32 und die Ringscheibe 26 ist mit dem hinteren Endbereich des Rohrabschnittes 18 verschweißt, wobei dies insbesondere über ein Laserschweißen erfolgt.

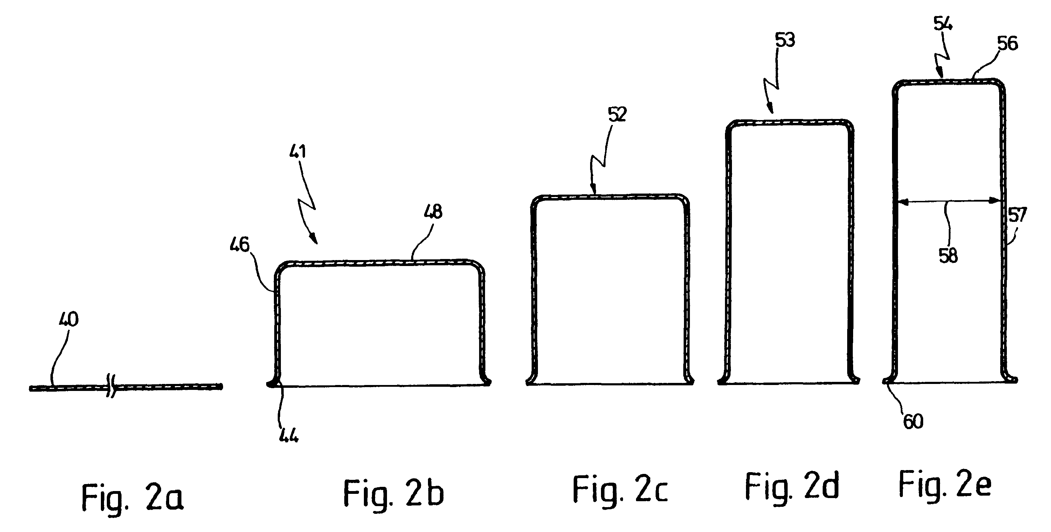

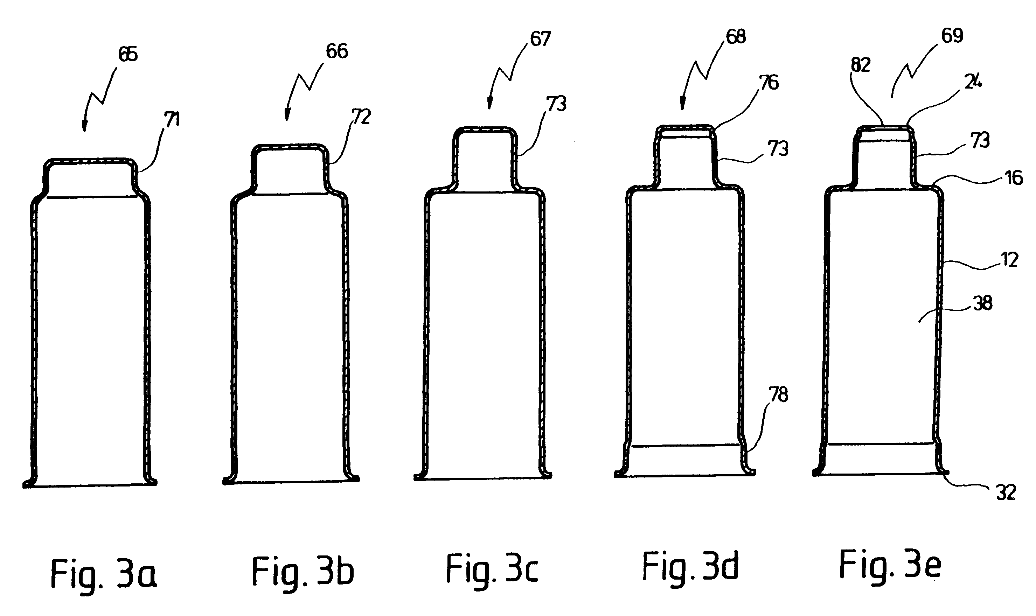

In den Figuren 2a - 2e bzw. den Figuren 3a - 3e sind die verschiedenen Vorzugsformen bzw. die entsprechenden Rohlinge dargestellt, die ausgehend von der in Fig. 2a dargestellten Platte 40 bis zum Erreichen der in Fig. 1 endgültigen Form des Spalttopfes 10 durchschritten werden.

Dabei wird in einer ersten Serie an Tiefziehvorgängen auf einer Stufenpresse ausgehend von der Platte 40 zunächst ein erster topfförmiger Rohling 41 dargestellt, der einen zylindrischen Körper 46 aufweist, der durch einen ebenen Boden 48 an einem hinteren (in der Darstellung von Fig. 2b oberen) Boden verschlossen ist. Am gegenüberliegenden Ende ist ein umlaufender Ringflansch 44 vorgesehen. Über den Ringflansch 44 konnte der Rohling 41 beim Tiefziehen gehalten werden bzw. als Angriffspunkt für ein Abziehen des Rohlings von einem hier nicht näher gezeigten Tiefziehdorn eines Tiefziehwerkzeuges der nicht dargestellten Stufenpresse abgezogen werden. Nachfolgend wird in drei weiteren Tiefziehschritten der topfförmige Rohling 41 unter Durchschreiten des in Fig. 2c und 2d dargestellten zweiten Rohlings bzw. dritten Rohlings in Form des in Fig. 2e dargestellten vierten Rohlings umgeformt.

Der vierte Rohling 54 weist einen zylindrischen Körper 57 auf, dessen Durchmesser 58 bereits dem lichten Innendurchmesser des Spaltrohres 12 (siehe Fig. 1) entspricht. Durch das mehrfache Abstrecken der zylindrischen Seitenwände der Rohlinge 52, 53, 54 ausgehend von der Platte 40 resultiert eine Abnahme der Materialdicke im zylindrischen Körper 57 ausgehend von etwa 0,4 mm Materialdicke bei der Platte 40 auf 0,3 mm. Die Materialstärke im Bereich des Bodens 56 und des Flansches 60 ist etwa unverändert.

In der in Fig. 3a- 3e dargestellten zweiten Serie an Tiefziehvorgängen wird aus dem Boden 56 des vierten Rohlings 54 und dem diesen umgebenden Endbereich des zylindrischen Körpers 57 ein gegenüber dem Durchmesser des zylindrischen Körpers 57 durchmessergeringerer Rohrabschnitt geformt.

Aus der Bildfolge von Fig. 3a bis 3c ist zu entnehmen, daß zunächst ein fünfter Rohling 65 mit einem relativ breiten und niederen ersten Rohrabschnitt 71 ausgebildet wird, der über den zweiten Rohrabschnitt 72 des sechsten Rohlings 66 in den in Fig. 3c dargestellten dritten Rohrabschnitt des siebten Rohlings 67 umgeformt wurde.

Der dritte Rohrabschnitt 73 weist bereits den lichten Innendurchmesser und die Tiefe des in Fig. 1 dargestellten Rohrabschnittes 18 auf. Zur Erleichterung der in Zusammenhang mit Fig. 1 beschriebenen Montage der Ringscheibe 26 bzw. des Lagerschildes 34 wird, wie aus dem achten Rohling in Fig. 3d zu entnehmen, am Endbereich des dritten Rohrabschnittes ein eingeengter Abschnitt 76 ausgebildet, dessen Durchmesser etwa 0,2 mm geringer als der des nicht eingeengten dritten Rohrabschnittes 73 ist.

Außerdem wird im Bereich des offenen Endes des achten Rohlings ein aufgeweiteter Abschnitt 78 hergestellt, dessen Außendurchmesser etwa 0,1 mm größer ist als der Außendurchmesser des nicht aufgeweiteten Bereiches des achten Rohlings 68.

In einem abschließenden Formschritt wird in dem Boden 80 des dritten Rohrabschnittes 73 die Öffnung 24 (siehe auch Fig. 1) ausgestanzt.

Gleichzeitig wird der Ringflansch 32 in seine endgültige kreisrunde Umfangsform beschnitten. Durch Anisotropie des metallischen Materials nimmt der am offenen Ende der jeweiligen Rohlinge angeordnete Flansch nach und nach eine wellenlinige Umfangskontur ein, da je nach Raumrichtung mehr oder weniger Material vom Ringflanschbereich mit abgezogen wird.

Abschließend wird auf den Rohling von Fig. 3e über dessen Außenseite das in Fig. 1 dargestellte Lagerschild 34 geschoben und wie zuvor beschrieben verschweißt. Zugleich wird, wie zuvor beschrieben, die Ringscheibe 26 montiert.

In weiteren Ausführungsbeispielen ist vorgesehen, den Ringflansch 32 wesentlich größer auszubilden, so daß der Ringflansch zugleich als Montageflansch dienen kann.

In dem in den Figuren dargestellten Ausführungsbeispiel ist es jedoch günstiger, den dargestellten relativ geringen Ringflansch 32 herzustellen und anschließend daran das Lagerschild 34 anzubringen. Dies hat im Hinblick auf die Ausgestaltung der Tiefziehwerkzeuge den Vorteil, daß darin keine Aussparungen oder Aushöhlungen vorgesehen werden müssen, die den relativ großen Ringflansch, wie er sich in Form des Lagerschildes 34 darstellt, aufnehmen müssen.

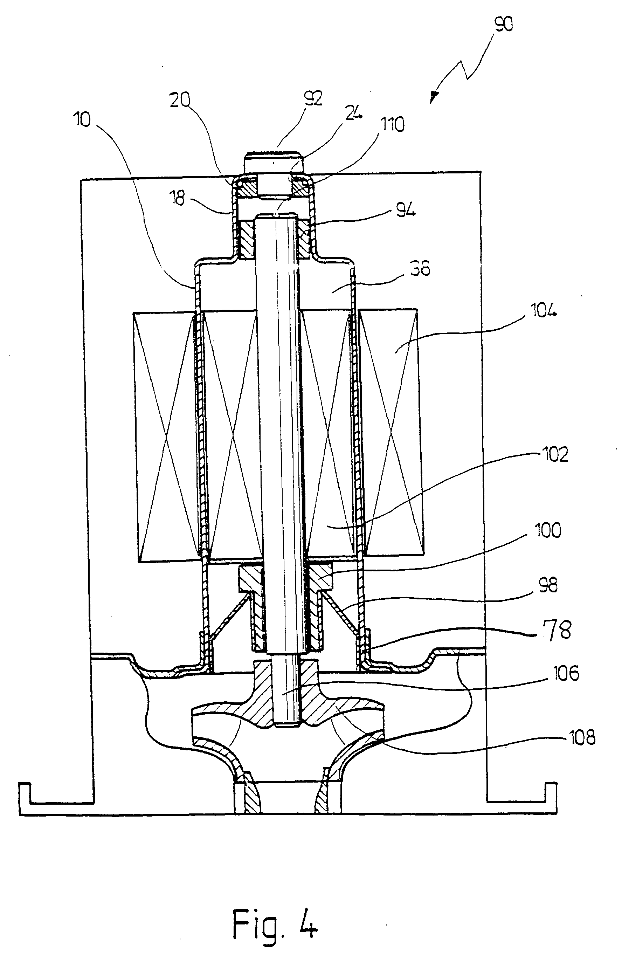

In Fig. 4 ist stark schematisiert ein Spaltrohrmotor 90 dargestellt, in dem der in Fig. 1 dargestellte Spalttopf 10 eingebaut ist. Aus Fig. 4 ist am oberen (in der hier verwendeten Terminologie hinteren) Ende des Spaltrohrmotores 90 in die Öffnung 24 bzw. in die Gewindeöffnung der Ringscheibe 26 ein Stopfen 92 eingedreht.

Im Rohrabschnitt 18 sitzt ein Lager 94, das auf einem Endbereich einer Welle 96 sitzt. Am gegenüberliegenden offenen Ende des Spalttopfes 10 ist ein Einsatz 98 eingeschoben, der ein weiteres Lager 100 der Welle 96 trägt. Der im Innenraum 38 des Spaltrohres 12 des Spalttopfes 10 aufgenommene Teil, also Lager 94, 100, Welle 96 und entsprechende hier nicht näher bezeichnete Wicklungen, bildet einen Rotor 102 des Spaltrohrmotores 90.

Um die Außenseite des Spalttopfes 10 ist, wie an sich bekannt, der Stator 104 des Spaltrohrmotores 90 angeordnet. Der Spalttopf 10 ist somit, wie an sich im Stand der Technik bekannt, in einem Spalt zwischen Rotor 102 und Stator 104 des Spaltrohrmotores 90 angeordnet und sorgt für einen dichten Abschluß dieser Räume voneinander.

Dazu ist das Lagerschild 34 mit entsprechenden hier nicht näher bezeichneten Teilen des Gehäuses des Spaltrohrmotores 90 dichtend verbunden.

Am vorderen (in der Darstellung von Fig. 4 unteren) Ende ist die Welle 96 mit einem Zapfen 106 versehen, auf dem ein Laufrad 108 sitzt, das für die Umwälzung des Medium sorgt, das durch die Pumpe bewegt werden soll, deren Antrieb durch den Spaltrohrmotor 90 erfolgt. Dabei kann das Medium zur Kühlung des Rotors (102) in den Innenraum des Spalttopfes (10) eintreten.

Am hinteren Ende ist die Welle 96 mit einem Schlitz 110 versehen, über den bei Festsitzen des Rotors 102 und Abdrehen des Stopfens 92 mittels eines Werkzeuges die festsitzende Welle 96 freigedreht werden kann.

## Patentansprüche

1. Spalttopf für einen Spaltrohrmotor (90), mit einem Spaltrohr (12), dessen Innenraum (38) als Rotorraum zur Aufnahme eines Rotors (102) des Spaltrohrmotores (90) dient, mit einem an einem hinteren Ende (14) des Spaltrohres (12) angeordneten, dieses Ende (14) abschließenden Boden (15), der einen gegenüber dem Spaltrohr (12) durchmessergeringeren Rohrabschnitt (18) aufweist, der zur Aufnahme eines hinteren Lagers (94) des Rotors (102) dient, wobei Spaltrohr (12), Boden (15) und dessen Rohrabschnitt (18) als einstückiges Tiefziehteil ausgebildet sind, und wobei an einem vorderen Ende (30) des Spaltrohres (12), einstückig mit diesem, ein Ringflansch (32) angeformt ist, **dadurch gekennzeichnet, daß** das Spaltrohr (12) am vorderen Endbereich einen geringfügig aufgeweiteten, durchmessergrößeren Abschnitt (78) aufweist, der erst am Ende mehrerer Tiefziehvorgänge zum Herstellen des Spalttopfes (10) unter Beibehaltung der Maßhaltigkeit des bereits ausgeformten Spaltrohres (12) aus metallischem Material ausgeformt worden ist, so daß vom hinteren Ende her ein weiteres Bauteil über den Spalttopf geführt werden kann und auf den durchmessergrößeren Abschnitt im Preßsitz aufdrückbar ist.

2. Spalttopf nach Anspruch 1, **dadurch gekennzeichnet, daß** auf dem durchmessergrößeren Abschnitt (78) ein ringscheibenförmiges Lagerschild (34) aufgepreßt sitzt und am Ringflansch (32) anliegt.

3. Spalttopf nach Anspruch 1 oder 2, **dadurch gekennzeichnet, daß** ein Boden (22), der ein hinteres Ende (20) des durchmessergeringeren Rohrabschnittes (18) abschließt, eine Öffnung (24) aufweist.

4. Spalttopf nach Anspruch 3, **dadurch gekennzeichnet, daß** der durchmessergeringere Rohrabschnitt (18) an einem hinteren Endbereich einen geringfügig eingeengten, durchmessergeringeren Abschnitt (76) aufweist.

5. Spalttopf nach Anspruch 4, **dadurch gekennzeichnet, daß** im Innenraum des eingeengten, durchmessergeringeren Abschnitts (76) eine Ringscheibe (26) formschlüssig eingepreßt ist.

6. Spalttopf nach Anspruch 5, **dadurch gekennzeichnet, daß** die Ringscheibe (26) als Gewindescheibe ausgebildet ist, in die ein Gewindestopfen (92), der von der Außenseite her durch die Öffnung (24) im Boden (22) des durchmessergeringeren Rohrabschnittes (18) durchreicht, eindrehbar ist.

7. Verfahren zum Herstellen eines Spalttopfes (10) für einen Spaltrohrmotor (90), mit einem Spaltrohr (12), dessen Innenraum (38) als Rotorraum zur Aufnahme eines Rotors (102) des Spaltrohrmotores (90) dient, mit einem an einem hinteren Ende (14) des Spaltrohres (12) angeordneten, dieses Ende (14) abschließenden Boden (15), der einen gegenüber dem Spaltrohr (12) durchmessergeringeren Rohrabschnitt (18) aufweist, der zur Aufnahme eines hinteren Lagers (94) des Rotors (102) dient, wobei über Tiefziehen das Spaltrohr (12), der dieses an einem hinteren Ende (14) abschließenden Boden (15), sowie dessen gegenüber dem Spaltrohr (12) durchmessergeringeren Rohrabschnitt (18) als einstückiges Teil hergestellt wird, und am vorderen offenen Ende (30) des Spaltrohres (12), einstückig mit diesem, ein Ringflansch (32) angeformt wird, **dadurch gekennzeichnet, daß** am Ende mehrerer Tiefziehvorgänge am vorderen offenen Endbereich des Spaltrohres (12) ein geringfügig aufgeweiteter, durchmessergrößerer Abschnitt (78) geformt wird, so daß vom hinteren Ende her ein weiteres Bauteil über den Spalttopf geführt werden kann und auf den durchmessergrößeren Abschnitt im Preßsitz aufdrückbar ist.

8. Verfahren nach Anspruch 7, **dadurch gekennzeichnet, daß** in einer ersten Serie an mehreren, aufeinanderfolgenden Tiefziehvorgängen, zunächst ein topfförmiger Rohling (54) tiefgezogen wird, der an einem hinteren Ende durch einen Boden (56) geschlossen und an einem vorderen Ende mit einem Ringflansch (60) versehen ist, und daß anschließend in einerzweiten Serie an Tiefziehvorgängen aus dem Boden (60) ein sich vom hinteren Ende des Rohlinges fort erstreckender durchmessergeringerer Rohrabschnitt (18) hergestellt wird.

9. Verfahren nach Anspruch 8, **dadurch gekennzeichnet, daß** während der ersten Serie an Tiefziehvorgängen im allerersten Schritt, ausgehend von einem plattenförmigen Körper (40), ein topfförmiger Rohling (41) mit einem Ringflansch (44) am vorderen offenen Ende hergestellt wird.

10. Verfahren nach Anspruch 9, **dadurch gekennzeichnet, daß** anschließend der im allerersten Schritt erhaltene topfförmige Rohling (41) über weitere Tiefziehvorgänge zu einem Rohling (54) mit einem zylindrischen Körper (57) gezogen wird, der im Durchmesser den Maßen des endfertigen Spaltrohres (12) entspricht.

11. Verfahren nach Anspruch 7, **dadurch gekennzeichnet, daß** zunächst der rohrförmige durchmessergeringere Rohrabschnitt (18) tiefgezogen wird und anschließend der Körper des Spaltrohres (12) tiefgezogen wird.

12. Verfahren nach Anspruch 7, **dadurch gekennzeichnet, daß** der Rohrabschnitt (18) und das Spaltrohr (12) unter Durchschreiten von Vorformen derselben zugleich hergestellt werden.

13. Verfahren nach einem der Ansprüche 7 bis 12, **dadurch gekennzeichnet, daß** am Ende der Tiefziehvorgänge am hinteren Endbereich des durchmessergeringeren Rohrabschnittes (18) ein geringfügig eingeengter, durchmessergeringerer Abschnitt (76) geformt wird.

14. Verfahren nach einem der Ansprüche 7 bis 13, **dadurch gekennzeichnet, daß** in einem Boden (22), der das hintere Ende des durchmessergeringeren Rohrabschnittes (18) abschließt, eine Öffnung (24) eingebracht wird.

## Claims

1. Air gap hood for a gap tube motor (90), with an air gap tube (12), the interior space (38) of which serves as rotor space to accommodate a rotor (102) of the gap tube motor (90), with a base (15) arranged at a rear end (14) of the air gap tube (12) and terminating said end (14), said base exhibiting a tube section (18) of smaller diameter in relation to the air gap tube (12), said tube section serving to accommodate a rear bearing (94) of the rotor (102), whereby air gap tube (12), base (15) and tube section (18) thereof are designed as a one-piece deep-drawn component and whereby a ring flange (32) is moulded on a front end (30) of the air gap tube (12), in one piece with the latter, **characterized in that** the air gap tube (12) exhibits a slightly widened section (78) of greater diameter on the front end region, which is formed at the end of several deep-drawing operations for producing the air gap hood (10), thereby maintaining the dimensional stability of the already formed air gap tube (12) of metallic material, so that a further constructional element can be guided over the air gap hood (10) from the rear end thereof and can be pressed on the section of greater diameter in a press fit.

2. Air gap hood according to claim 1, **characterized in that** an end shield (34) in the form of an annular disc is pressure-mounted on the section (78) of greater diameter and adjoins the ring flange (32).

3. Air gap hood according to claim 1 or 2, **characterized in that** a base (22) terminating a rear end (20) of the tube section (18) of smaller diameter exhibits an aperture (24).

4. Air gap hood according to claim 3, **characterized in that** the tube section (18) of smaller diameter exhibits a slightly constricted section (76) of smaller diameter on a rear end region.

5. Air gap hood according to claim 4, **characterized in that** an annular disc (26) is pressed inside the interior space of the constricted section (76) of smaller diameter in positively engaged manner.

6. Air gap hood according to claim 5, **characterized in that** the annular disc (26) is designed as a threaded disc, into which a threaded stopper (92), which passes through the aperture (24) in the base (22) of the tube section (18) of smaller diameter from the outside, is capable of being screwed.

7. Process for producing an air gap hood (10) for a gap tube motor (90), with an air gap tube (12), the interior space (38) of which serves as rotor space to accommodate a rotor (102) of the gap tube motor (90), with a base (15) arranged at a rear end (14) of the air gap tube (12) and terminating said end (14), said base exhibiting a tube section (18) of smaller diameter in relation to the air gap tube (12), said tube section serving to accommodate a rear bearing (94) of the rotor (102), whereby the air gap tube (12), the base (15) terminating said air gap tube at a rear end (14) and also the tube section (18) thereof of smaller diameter in relation to the air gap tube (12) are produced as a one-piece component by deep-drawing, and a ring flange (32) is moulded on at the front open end (30) of the air gap tube (12), in one piece with the latter, **characterized in that** at the end of several deep-drawing operations a slightly widened section (78) of greater diameter is formed at the front open end region of the air gap tube (12), so that a further constructional element can be guided over the air gap hood from the rear end thereof and can be pressed on the section of greater diameter in a press fit.

8. Process according to claim 7, **characterized in that** in a first series of several successive deep-drawing operations a hood-shaped blank (54) is firstly deep-drawn which is closed at a rear end by a base (56) and is provided at a front end with a ring flange (60), and **in that** subsequently in a second series of deep-drawing operations a tube section (18) of smaller diameter extending away from the rear end of the blank is produced out of the base (60).

9. Process according to claim 8, **characterized in that** during the first series of deep-drawing operations in the very first step a hood-shaped blank (41) with a ring flange (44) at the front open end is produced, starting from a plate-shaped body (40).

10. Process according to claim 9, **characterized in that** the hood-shaped blank (41) obtained in the very first step is subsequently drawn by means of further deep-drawing operations into a blank (54) with a cylindrical body (57) corresponding in diameter to the dimensions of the ultimately finished air gap tube (12).

11. Process according to claim 7, **characterized in that** firstly the tube-shaped tube section (18) of smaller diameter is deep-drawn and then the body of the air gap tube (12) is deep-drawn.

12. Process according to claim 7, **characterized in that** the tube section (18) and the air gap tube (12) are produced at the same time by passing through a series of preforms of the said tube section (18) and air gap tube (12).

13. Process according to one of claims 7 to 12, **characterized in that** at the end of the deep-drawing operations a slightly constricted section (76) of smaller diameter is formed on the end region of the tube section (18) of smaller diameter.

14. Process according to one of claims 7 to 13, **characterized in that** an aperture (24) is provided in a base (22) terminating the rear end of the tube section (18) of smaller diameter.

## Revendications

1. Chemise d'entrefer pour un moteur à tube d'entrefer (90), constituée par un tube d'entrefer (12) dont le volume intérieur (38) sert d'espace rotorique pour recevoir le rotor (102) d'un moteur à tube d'entrefer (20), et par un fond (15) situé à l'extrémité arrière (14) du tube d'entrefer (12) en fermant cette extrémité (14), cette chemise présentant une section de tube (18) de diamètre réduit par rapport au tube d'entrefer (12) et servant de logement pour le palier arrière (94) d'un rotor (102), le tube d'entrefer (12), le fond (15) et la section de tube de diamètre réduit (18) formant une seule pièce obtenue par emboutissage profond, et une bride annulaire (32) étant formée à l'extrémité avant (30) du tube d'entrefer (12), d'une seule pièce avec celui-ci, **caractérisée en ce que** le tube d'entrefer (12) présente, dans sa partie terminale avant, une section légèrement élargie (78), de plus grand diamètre, qui est formée en matériau métallique uniquement à la fin d'une séquence d'opérations d'emboutissage profond visant à produire la chemise d'entrefer (10), tout en conservant la stabilité dimensionnelle de la chemise d'entrefer (12) déjà formée, de sorte qu'un autre élément peut être inséré sur la chemise d'entrefer, par son extrémité arrière, et être monté en ajustement serré sur la section de plus grand diamètre.

2. Chemise d'entrefer selon la revendication 1, **caractérisée en ce que** sur la section de plus grand diamètre (78), un flasque de palier en forme de disque annulaire (34) est fixé par pression et repose sur la bride annulaire (32).

3. Chemise d'entrefer selon l'une ou l'autre des revendications 1 ou 2, **caractérisée en ce qu'**un fond (22) fermant la partie arrière (20) de la section de tube de diamètre réduit (18), présente une ouverture (24).

4. Chemise d'entrefer selon la revendication 3, **caractérisée en ce que** la section de tube de diamètre réduit (18) présente, dans sa partie terminale arrière, une section légèrement plus étroite (76), de plus faible diamètre.

5. Chemise d'entrefer selon la revendication 4, **caractérisée en ce qu'**à l'intérieur de la section plus étroite (76), de plus faible diamètre, un disque annulaire (26) est fixé par pression, en engagement positif.

6. Chemise d'entrefer selon la revendication 5, **caractérisée en ce que** le disque annulaire (26) se présente sous la forme d'un disque taraudé dans lequel peut se visser un bouchon fileté (92) qui pénètre de l'extérieur par l'ouverture (24) du fond (22) de la section de tube de diamètre réduit (80).

7. Méthode de fabrication d'une chemise d'entrefer (10) pour un moteur à tube d'entrefer (90), constituée par un tube d'entrefer (12) dont le volume intérieur (38) sert d'espace rotorique pour recevoir le rotor (102) d'un moteur à tube d'entrefer (90), et par un fond (15) situé à l'extrémité arrière (14) du tube d'entrefer (12) en fermant cette extrémité (14), cette chemise présentant une section de tube (18) de diamètre réduit par rapport au tube d'entrefer (12) et servant de logement pour le palier arrière (94) d'un rotor (102), cette méthode permettant, par emboutissage profond, de réaliser en une seule pièce le tube d'entrefer (12) et le fond (15) qui le ferme à son extrémité arrière (14), ainsi que la section de tube (18) de diamètre réduit par rapport au tube d'entrefer (12), et de former une bride annulaire (32) à l'extrémité ouverte (30) à l'avant du tube d'entrefer (12) d'une seule pièce avec celui-ci, **caractérisée en ce**, par plusieurs opérations d'emboutissage profond, une section légèrement élargie (78), de plus grand diamètre, est formée dans la partie terminale ouverte à l'avant du tube d'entrefer (12), de sorte qu'un autre élément peut être inséré sur la chemise d'entrefer, par son extrémité arrière, et être monté en ajustement serré sur la section de plus grand diamètre.

8. Méthode selon la revendication 7, **caractérisée en ce que**, par une première séquence de plusieurs opérations successives d'emboutissage profond, une première ébauche en forme de casserole (54) est emboutie, celle-ci étant fermée à son extrémité arrière par un fond (56), son extrémité avant comportant un rebord annulaire (60), et **en ce que**, par une seconde séquence d'opérations d'emboutissage du fond (60), une section tubulaire de diamètre réduit (18) dépassant vers l'arrière de l'ébauche est ensuite obtenue.

9. Méthode selon la revendication 8, **caractérisée en ce que**, dans la première séquence d'opérations d'emboutissage profond, lors de la toute première étape, en partant d'une pièce en forme de plaque (40), il est réalisé une ébauche en forme de casserole (41) comportant un rebord annulaire (44) à son extrémité avant ouverte.

10. Méthode selon la revendication 9, **caractérisée en ce que**, l'ébauche en forme de casserole (41) obtenue lors de la toute première étape, est ensuite soumise à d'autres étapes d'emboutissage profond pour obtenir une ébauche (54), par emboutissage avec une pièce cylindrique (57) dont le diamètre correspond aux dimensions du tube d'entrefer final (12).

11. Méthode selon la revendication 7, **caractérisée en ce que** la section de tube de diamètre réduit (18) est obtenue, en premier lieu, par emboutissage profond, et que le corps du tube d'entrefer (12) est ensuite embouti.

12. Méthode selon la revendication 7, **caractérisée en ce que** la section de tube (18) et le tube d'entrefer (12) sont réalisés simultanément à partir de leurs ébauches correspondantes.

13. Méthode selon l'une quelconque des revendications 7 à 12, **caractérisée en ce qu'**à la fin des opérations d'emboutissage profond, une section légèrement plus étroite (76), de diamètre plus faible, est formée dans la région terminale à l'arrière de la section de tube de diamètre réduit (18).

14. Méthode selon l'une quelconque des revendications 7 à 13, **caractérisée en ce qu'**une ouverture (24) est pratiquée dans un fond (22) qui ferme l'extrémité arrière de la section de tube de diamètre réduit (18).
